# EUROPEAN PATENT APPLICATION

(11) **EP 4 717 874 A1**
(43) Date of publication of application: **01.04.2026**
(21) Application number: 25204355.9
(22) Date of filing: 24.09.2025
(51) Int. Cl.: E21B 7/02, E21B 11/00, E21B 25/00

(54) **AN APPARATUS AND A METHOD OF DRILLING HOLES**

(30) Priority: 30.09.2024 DK PA202430580
(71) Applicant: Golf & Machines ApS, 8800 Viborg (DK)
(72) Inventor: HANSEN, Finn Skade, 8800 Viborg (DK)
(74) Representative: Patrade A/S

(57) **Abstract**

There is described an apparatus for drilling a hole, preferably in a golf green. The apparatus comprises a support frame, a moveable cutter head, a handle, a base, a tread plate, an ejection mechanism, a drive motor configured to power the operation of the apparatus and control means.

A drive shaft connects the drive motor with the cutter head via a threaded coupling. The cutter head is advanced relative to the tread plate when the drive shaft is rotated in one rotational direction and is retracted relative to the tread plate when the drive shaft is rotated in the opposite rotational direction.

The drive shaft is provided with a central threaded portion and a non-threaded end portion at each end of the thread. The non-threaded end portions act as slip couplings configured to allow a rotation of the drive shaft without axial movement of the threaded coupling whereby the axial movement of the cutter head is stopped.

The control means is configured to reverse the rotating direction of the drive motor and thus also the rotational direction of the drive shaft.

## Description

### Field of the Invention

The present invention relates to an apparatus for drilling a hole, preferably in a golf green, comprising a support frame, a moveable cutter head, a handle, a base, an ejection mechanism, a power source comprising a drive motor configured to power the operation of the apparatus and control means, where the base is arranged at one end of the support frame and has an tread plate for contacting a surface, such as a green surface, the handle is arranged at the opposite end of the support frame, the cutter head is arranged relative to the base and configured to extend or retract relative to the tread plate along an axial direction when activated, the drive motor is connected to the cutter head via a drive arrangement with a drive shaft and is configured to control the axial movement of the cutter head, and the ejection mechanism is arranged for axial movement relative to the cutter head and configured to eject a drilled plug, such as an earth plug, from the cutter head, and wherein the drive arrangement comprise a connecting arrangement which is arranged between the drive shaft and the cutter head for transforming the rotation of the drive shaft into a reciprocating rotating movement of the cutter head.

Furthermore, the invention relates to a method of drilling holes, such as holes in a golf green, using the apparatus according to the present invention.

### Background of the Invention

It is known that holes in a golf course must be in optimal conditions so that the golf players get the best conditions for playing golf. Therefore, the green surfaces, fairways and semi-roughs are regularly inspected and treated to maintain the golf course in optimal conditions.

The golf holes are moved on a regular basis to vary the golf games and must be drilled carefully to prevent damage of the green edges and to allow the placement of a hole cup. The hole cup allows for the placement of a golf flag to allow players to visually identify the respective golf holes. Old golf holes are filled with the earth plug from newly, drilled golf holes and pressure is applied during insertion to level the earth plug relative to the green surface.

For drilling a hole in a green and possibly replacing it in an existing hole, different equipment has been developed which can be used for this work. Common to all these is that they have a circular cutter head which is placed right over the place where the hole is to be drilled. The cutter head rotates and is pressed down into the earth so that an earth plug is received in the cutter head. Subsequently, this earth plug is moved over into an existing hole.

US 5337831 A discloses a motor driven apparatus, where the operator must apply a counter force to resist the rotating force generated by the apparatus during drilling. At the same time, the operator must manually attempt to maintain the apparatus in the vertical alignment relative to the green surface during, thus increasing the risk of damaging the green edges or tilting the cutter head during drilling. The drilled earth plug is ejected by a foot operated pedal, which may require added force to activate if the earth plug sticks to the inner surface of the cutter head.

US 4947938 A discloses a similar motor driven apparatus, where the cutter head is connected to a threaded drive shaft, which in turn is connected to the motor. The ejection plate is arranged inside the cutter head and connected to an inner cylinder in which the drive shaft is arranged. The cylinder is connected to a clutch mechanism at the top, where the clutch is engaged or disengaged by moving a lever up or down. A drill stop is arranged on an outer cylinder, which extends over the inner cylinder. The clutch mechanism is spring loaded, and the level must be always engaged to ensure that the cutter head is to drill into the ground. However, there is a risk of the clutch mechanism slipping out of engagement due to wear and reduced tension in the spring. Furthermore, the operator must manually resist the rotating force generated during drilling and manually attempt to hold the apparatus in the correct vertical position during drilling.

US 4958688 A also discloses a motor driven apparatus, where the cutter head is connected to a threaded drive shaft, which in turn is connected to the motor. However, the operator must also manually resist the rotating force generated during drilling and manually attempt to hold the apparatus in the correct vertical position during drilling.

US 4763735 A discloses a motor driven apparatus mounted on a cart, where a cylinder with an extendable piston is used to raise and lower the apparatus during drilling. This solution is complex and expensive, and the system depends on the wheel suspension of the cart to vertically align the cutter head.

EP 1601422 B1 discloses a motor driven apparatus, which has a foot operated tread plate for holding the apparatus in place during drilling. The motor is arranged on the support frame and connected to the cutter head by a reciprocating drive unit. A manually operated handle connected to the ejection plate via a connecting rod is used to manually eject the drilled plug. This apparatus has proven to be very effective. However, the apparatus is relatively heavy to lift and transport, and furthermore the manually ejection of the drilled plug may be a hard work which may lead to injuries to the operators over time.

EP 1698379 A1 discloses a motor driven apparatus, where the ejection plate is connected to a set of steering rods at one end via a flexible bridge connection. The steering rods are at the other end connected to the support frame by springs or a hydraulic system. The operator must apply force to the apparatus during drilling to drive the cutter head into the ground. The operator must then pull the apparatus with the drilled plug out of the new hole and place it into an existing hole. This makes the apparatus difficult to use and may cause injuries to the operator.

SE404301 B discloses an apparatus as mentioned by way of introduction and as defined in the preamble of claim 1. The apparatus disclosed do not teach drive shaft having a central portion with a thread and with a non-threaded end portion at each end of the thread, wherein the non-threaded end portions act as slip couplings configured to allow a rotation of the drive shaft without axial movement of the threaded coupling whereby also the axial movement of the cutter head is stopped.

Hence, there is a need for an apparatus for drilling holes and optionally filling in existing holes which apparatus will give less risk of injuries to the operators.

### Object of the Invention

One object of the present invention is to solve the abovementioned problems of the prior art, or at least provide an alternative solution.

One object of the present invention is to provide an apparatus and method that allows for simply and effectively drilling holes.

One object of the present invention is to provide an apparatus and method that allows for a simple and fast ejection of drilled plugs.

One object of the present invention is to provide an apparatus and method that improves the working conditions for operators during transport, drilling and ejection of the drilled plug.

One object of the present invention is to provide an apparatus and method that makes it possible for the operator to place a drilled plug with the surface thereof in specific position relative to the surface of the golf green.

### Description of the Invention

One objective of the invention is achieved by an apparatus mentioned by way of introduction and being particular in that the drive shaft is a threaded shaft which is connected to the cutter head via a threaded coupling, where the cutter head is advanced relative to the tread plate when the drive shaft is rotated in one rotational direction and is retracted relative to the tread plate when the drive shaft is rotated in the opposite rotational direction,
that the drive shaft is provided with a central threaded portion and a non-threaded end portion at each end of the thread, wherein the non-threaded end portions act as slip couplings configured to allow a rotation of the drive shaft without axial movement of the threaded coupling whereby also the axial movement of the cutter head is stopped,
that the control means is further configured to reverse the rotating direction of the drive motor and thus also the rotational direction of the drive shaft.

The method according to the invention is particular in that the method comprises the following steps:
- grabbing the handle,
- positioning the apparatus at a position where a new hole is to be drilled so the tread plate is resting on the surface
- placing the feet of an operator on the tread plate,
- using the control means to activate the drive motor for driving the drive shaft in one rotational direction for establishing the reciprocating rotating cutting motion of the cutter head, and simultaneously for advancing the cutter head for drilling a new hole,
- keep driving the drive shaft till the threated coupling reach the non-threaded end portion, whereby axial movement of the cutting head is stopped,
- using the control means to deactivate the drive motor and thereby stopping the reciprocating rotating cutting motion of the cutter head,
- lifting the apparatus vertically upwardly so that the cutter head with a drilled plug is lifter out of the new hole.

After the hole has been drilled, there will be an earth plug in the cutter head which either is to be discarded or to be replaced in an existing hole. In order to effect this, the means for releasing the said earth plug is an ejection plate provided inside the cutter head.

In order to achieve the reciprocating turning movement of the cutter head, the drive arrangement connecting the drive shaft, and the cutter head may include an eccentric drive.

The ejection plate disposed inside the cutter head will, when the apparatus is not in use, be disposed in an inactive position close to the lower part of the cutter head. This entails that the ejection plate is laid upon the surface of the earth and is slowly pushed up through the cutter head when the hole is drilled. This occurs when activating the drive motor in the one rotational direction and thus the drive shaft in the one direction. When the threaded coupling reaches the non-threaded end portion of the drive shaft the axial movement of the cutter head is stopped. Thereafter the operator via the control means deactivate the drive motor and thus stops the reciprocating movement of the cutter head.

During the drilling operation the operator will stand on the tread plate in order to secure that the torque is transferred to the cutting action and also ensuring the mutual axial movement will force the cutter head into the ground.

The use of the tread plate ensures that the hole becomes an exact circular hole with sharp edges. By placing the tread plate on the surface of the earth and thereby standing on the tread plate, the operator will counteract the rotary forces arising when the cutter head rotates and is pressed down into the earth.

In order to drill a vertical hole so that the cup is always in vertical position and the flag placed in the cup is standing vertically up from the hole, the tread plate is connected with the lower parts of the base with angularly adjustably means. This implies that if the surface is only sloping slightly at the spot where the new hole is to be drilled, the angularly adjustable tread plate is adjusted so that the upper parts of the apparatus before starting the drilling operation will stand vertically.

The two angularly adjustable parts of the apparatus is adjusted, e.g. with fitted spirit levels, so that the cutter head is positioned vertically.

In order to ensure that the angularly adjustable parts remain in the desired angle during the entire drilling process, they may be provided with a locking arrangement, implying that it is possible to adjust and lock the angularly adjustable parts in an arbitrary angle, depending on the slope of the surface.

The tread plate may have different shapes but must have a size so that it is possible to step on it with both feet, and that it is possible to connect the angularly adjustable lower parts of the control means in an area around an opening in the tread plate.

After the drilling is stopped the apparatus with the drilled plug is lifted free of the ground.

In order to drive out the drilled plug, the ejection plate is connected with drive shaft through the threaded coupling. Normally the apparatus is placed with the cutter head in an existing hole.

Upon activation of the drive motor in the opposite direction the drive shaft is driven in the opposite rotational direction and through the connection between the threaded coupling and the thread on the drive shaft the ejection plate is moved axially while the cutting head is driven in the reciprocating rotation. Hereby the cutting head is moved upward and leaves the drilled plug in the existing hole.

During the ejection operation the operator will stand on the tread plate to secure that the torque is transferred to the axial movement of the cutting head being pressed out of the existing hole leaving the drilled plug in the existing hole due to the action of the ejection plate.

When the threaded coupling reaches the non-threaded end portion of the drive shaft the axial movement of the cutter head is stopped. At this point the cutter head is above the surface. Thereafter the operator via the control means deactivate the drive motor and thus stops the reciprocating movement of the cutter head. Hereafter the Apparatus is ready for drilling a new hole after the operator has activated the control means for again effecting a rotation of the drive shaft in the one direction.

With such operation the operator will have improved working conditions for drilling and ejection of the drilled plug. The operator only needs to active the drive motor in one direction and shift the rotation of the motor to rotate in the opposite direction. The motor ensures an effective drilling and ejection of a drilled plug with a minimum of manual effort.

The cutter head may be designed so that upwards it is fastened to the drive shaft on which there is a fastening arrangement on which the upper, tubular part of the cutter head can be mounted. The mounting of the cutter head can be effected with e.g. screws, bolts or the like. This fastening arrangement does not cover the entire tubular earth opening in the cutter head, implying that the operator can see down on the ejection plate or on a part of the drilled plug.

The possibility of seeing the drilled plug is e.g. used to place the drilled plug in the correct position when placed in an existing hole, so that e.g. the direction of the grass is approximately the same for the drilled plug as for the surrounding green.

In order to determine/adjust the depth of the drilled hole, stop means may been provided. Such stop means will preferably be the non-threaded end portions of the drive shaft. However, these may be combined with other forms of stop means e.g. split pins or sockets

The method makes it possible for the operator to control the placing of a drilled plug in higher or deeper position in the existing hole and thereby provide a good quality of the golf green after the drilled plug is inserted in the existing hole.

By increasing the pressure on the handle, the drilled plug may be compressed whereby the surface of the drilled plug may be positioned below the surface of the green. If no pressure or a mall pressure is effected on the handle, the surface of the drilled plug may be positioned above the surface of the green or in the level of the surface of the green.

If the operator chooses to walk around during the work with drilling new holes, the tread plate may be provided with a number of wheels or rollers, implying it will be possible to transport the apparatus by tipping the tread plate and then push or pull the entire apparatus further on to the next hole. The wheels or rollers with which the apparatus is provided are to be a broad as possible, or of a nature providing that the deadweight of the apparatus is not making marks in the green.

When the operator comes to the golf green and has decided where the new hole is to be placed, the tread plate with the lower parts of the angularly adjustable control means is positioned so that it is possible to allow for the inclination of the green and thereby to achieve that the cutter head stands vertically when the drilling is commenced.

The two parts of the control means are assembled, and the apparatus is adjusted, e.g. with fitted spirit levels, so that the cutter head is positioned vertically.

By using a tread plate, it is furthermore prevented that compressing of the surrounding areas of the hole occurs while drilling holes. Compression may contribute to destroy the area and make it uneven so that it is difficult to perform putting along the ground with a golf ball. The large surface area of the tread plate provides the pressure from greenkeeper and apparatus to be distributed evenly on a larger area, whereby the area is spared against unwanted indentations and treading marks.

In an embodiment of the invention, the apparatus is peculiar in that the power source is mounted in a drivable interface configured to connect the drive motor and the drive shaft.

With such drivable interface it is possible to adopt different drive motor to the apparatus only by changing the drivable interface.

In an embodiment of the invention, the apparatus is peculiar in that the power source is a handheld power tool, and the drivable interface is configured to receive and hold the power tool. Such handheld power tools may be of the shelf products. Such product is easy to replace, and it is also possible to use handheld power tools from different producers only by changing the interface in which the handheld power tool is mounted. The handheld power tools will normally be provided with control means for shifting the rotational direction of the drive motor in use handheld power tool.

In an embodiment of the invention, the apparatus is peculiar in that the control means are integrated in the power source. This may be the case in a handheld power tool e.g. a screwdriver

In an embodiment of the invention, the apparatus is peculiar in that the external power source comprises a battery-operated drive motor.

A battery-operated drive motor is advantageous as this makes a need for external power source unnecessary. The handheld power tool may be a battery-operated screwdriver

In an embodiment of the invention, the apparatus is peculiar in that the control means is configured to be operated via the power source or via control input means arranged on the handle. This provides for a freedom of choice in order to secure that the control means for the control input is arranged om the handles used by the operator to operate the apparatus. One handle may be the handle of a handheld power tool which normally comprises control means arranged for easy operation during use.

In an embodiment of the invention, the apparatus is peculiar in that the end portions of the thread on the drive shaft comprise a lead-in chamfer portion.

The lead-in chamfer portion arranged at the non-threaded end portion of the drive shaft will ensure a safe engagement of threaded coupling with thread of the drive shaft at either end of the drive shaft.

In an embodiment of the invention, the method further comprises placing the drilled plug in an existing hole, which method is peculiar in that the method comprises the following steps:
- using the control means for reversing the rotation of the drive motor,
- positioning the apparatus at a position over an existing hole so that the cutter head with the drilled plug is positioned inside the existing hole,
- placing the feet of an operator on the tread plate,
- using the control means to activate the drive motor for rotating the drive shaft in the opposite rotational direction for establishing the reciprocating rotating motion of the cutter head, and simultaneously for retracting the cutter head from the existing hole to eject the drilled plug from the cutter head
- keep driving the drive shaft till the threated coupling reach the non-threaded end portion, whereby axial movement of the cutting head is stopped leaving the plug in the existing hole,
- using the control means to deactivate the drive motor and thereby stopping the reciprocating rotating motion of the cutter head,
- removing the apparatus and optionally fine-adjusting the level of the drilled plug relative to the level of the surrounding surface to conceal the existing hole.

With such method the operator will have improved working conditions for drilling and ejection of the drilled plug. The operator only needs to active the drive motor in one direction and shift the rotation of the motor to rotate in the opposite direction. The motor ensures an effective drilling and ejection of a drilled plug with a minimum of manual effort.

In an embodiment of the invention, the method is peculiar in that the method comprises the following step,
- drilling the hole in a golf green, which hole is provided for the placement of a hole cup.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, where
- Fig. 1: illustrates parts of an apparatus according to prior art,
- Fig. 2: is a side view of the apparatus shown in Fig. 1,
- Fig. 3: is a perspective view of the apparatus shown in Figs. 1 and 2,
- Fig. 4: illustrates a prior art system for marking a golf hole,
- Fig. 5: is a schematic view of an apparatus according to the present invention,
- Fig. 6: is a first sideview of the apparatus shown in Fig. 5,
- Fig. 7: is a second sideview of the apparatus shown in Fig. 5,
- Fig. 8: is a section through the apparatus shown in Fig. 5, with a release plate in an intermediate position,
- Fig. 9: is a section through the apparatus shown in Fig. 5, with the release plate in a top position,
- Fig. 10: is a section through the apparatus shown in Fig. 5, with the release plate in a bottom position,
- Fig. 11: is a partial section through the apparatus illustrating a drive shaft being connected with a cutter head,
- Fig. 12: is is a schematic view of an apparatus according to the present invention illustrating the release plate in a top position,
- Fig. 13: is a side view of the threaded drive shaft,
- Fig. 14: is a partial view of the threaded drive shaft shown in Fig. 13,
- Fig. 15: is a partially schematic view of an apparatus according to the present invention illustrating the support frame, and
- Fig. 16: is a partially schematic view of an apparatus according to the present invention illustrating the base.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

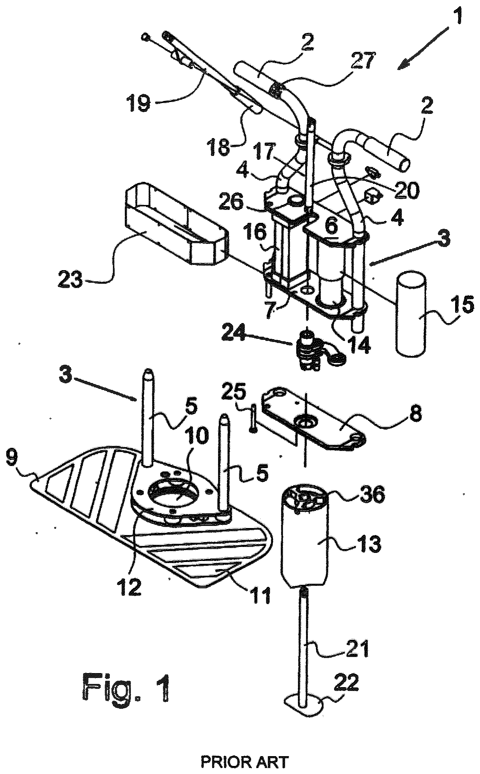

Figs. 1 to 3 illustrate a prior art apparatus known from EP 1601442 B1. This apparatus is explained here as background for the present invention. The apparatus according to the present invention may be a modification of this prior art apparatus. A more detailed explanation of the method of using the apparatus is found in EP 1601442 B1.

Fig. 1 shows an apparatus 1 which includes:
- handle 2,
- control means 3 including upper parts 4 and lower parts 5,
- retainer plates 6, 7, 8,
- a tread plate 9 including an opening 10 and anti-skid fields 11,
- a protecting means 12
- a cutter head 13 with a holder arrangement 36,
- a drive motor 14 with guard 15,
- a battery element 16,
- an articulated bending arm 17 including a handle 18, an upper activation part 19, a central part 20, a lower part 21 and a plate 22,
- a guard 23,
- a connecting rod arrangement 24,
- a stop means 25,
- a spirit level 26, and
- an activating button 27.

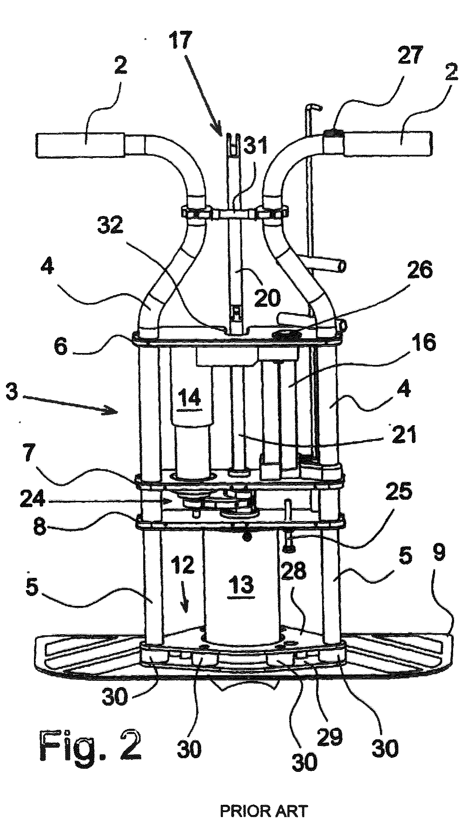

Fig. 2 shows the apparatus 1 where the upper parts 4 of the control means 3 are connected to the handles 2 and held together with the retainer plates 6, 7, 8 that are disposed along the upper parts 4 of the control means 3.

The lower parts 5 of the control means 3 are shown disposed in the upper parts 4 of the control means 3 and are connected downwards angularly adjustable to a tread plate 9.

The tread plate 9 is provided with a protecting means 12 which is a plate construction including two plates 28, 29 separated by spacer elements 30. On both plates 28, 29 are provided apertures allowing the cutter head 13 to pass through.

On the retainer plate 6 is provided a spirit level 26 so that the greenkeeper can see whether the hole is drilled vertically, irrespectively of the slope of the green.

Between the uppermost retainer plate 6 and the central retainer plate 7, the drive motor 14 and a replaceable battery element 16 are disposed, which are interconnected electrically, and where the drive motor 14 can be activated by means of an activation button 27 which is disposed in immediate vicinity of one handle 2, so that by holding the handle 2 it is possible to reach the activation button 27 by e.g. a thumb.

Between the central retainer plate 7 and the lowermost retainer plate 8, the connecting rod arrangement 24 is disposed, connecting the drive motor 14 with the cutter head 13 and providing for transforming the rotation of the drive motor 14 into a reciprocating turning movement of the cutter head 13.

In connection with the lowermost retainer plate 8 there is provided a stop means 25 in the shape of an adjustable screw/bolt device. By adjusting the screw/bolt device 25, it is possible to determine the desired depth of the holes and to compensate for wear of the cutter head 13, since the screw/bolt device 25 will bear against the upper side of plate 29 when the upper parts 4 of the control means 3 are brought down over the lower parts 5 of the control means 3 and thereby stop the drilling down of the cutter head 13.

The upper actuation part (not shown) of the articulated bending arm 17 is pivotably connected with the upper parts 4 of the control means 3 around a reinforcement 31 and connected with the central part 20, which in turn is connected with the lowermost part 21 which is passed down through an aperture 32 in the retainer plate 6, an opening (not shown) in the retainer plate 7, the connecting rod arrangement 24 and down internally of the cutter head 13.

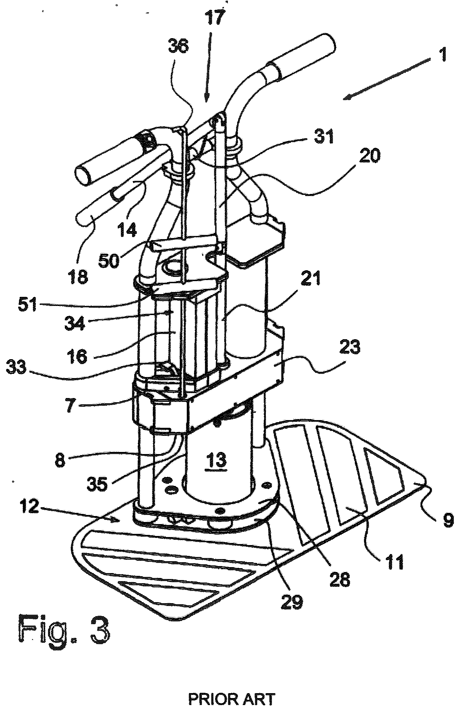

On Fig. 3 is shown how the upper activation part 19 of the articulated bending arm 17 is connected to the central part 20. This implies that when the plate (not shown) internally of the cutter 13 is pressed upwards, the joint of the bending arm 17 will deflect. In the shown embodiment, the central part 20 of the bending arm 17 will deflect inwards against the greenkeeper (not shown), while the upper activation part 19, due to its pivoting connection around the reinforcement 31, will turn away from the greenkeeper (not shown). In order to eject the earth plug (not shown) from the cutter head 13, the handle 18 on the upper activation part 19 is pulled, whereby is obtained a downwards force on the plate (not shown) inside the cutter head 13.

In order to protect the connecting rod arrangement (not shown), the guard 23 is provided between the retainer plate 7 and the retainer plate 8, so that it extends around along the edge of the retainer plates 7, 8 and thereby closes off the connecting rod arrangement (not shown). The guard 23 is preferably detachable so that it is possible to repair/adjust the connecting rod arrangement (not shown).

In connection with the battery element 16, a locking device 33 is provided which can be loosened/tightened, whereby it becomes possible to replace the battery element 16 or to fasten the battery element 16 to the apparatus 1.

Protecting means 12, which is a plate construction including two plates 28, 29, will protect the feet (not shown) of the greenkeeper against the cutter head 13, when the feet are placed on the tread plate 9 which is provided with anti-skid fields 11.

The apparatus 1 is provided with a jabbing element 34 for airing earth plugs (not shown) which is fastened to the apparatus 1, when the jabbing element 34 is not in use, through holes in the retainer plates 6, 7, 8.

The jabbing element 34 is shown in a form where one end is a pointed end 35 for pushing down earth plugs, and a second end a hook 36 for accommodating a cup in a golf hole for placing an earth plug. The jabbing element 34 has two handles 50, 51, where the handle 50 is used when applying the pointed end 35 and the handle 51 is used when applying hook 36.

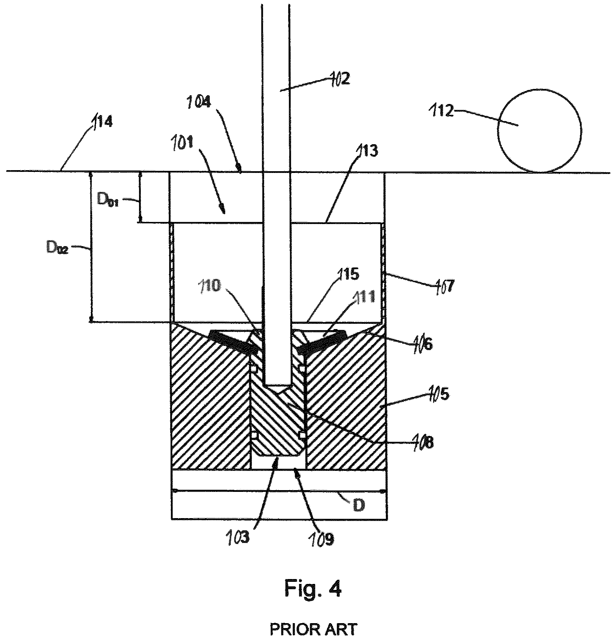

In order to get a clearer understanding of the specific use for drilling a hole being a golf hole in a golf green for the placement of a hole cup, a short explanation of a system for marking the golf hole is given in connection with Fig. 4.

Fig. 4 shows a prior art system for marking a golf hole, comprising a hole cup 101, a flagstick 102 and a ferrule 103. The hole cup 101 is adapted to be positioned in a golf hole 104 and comprises a bottom piece 105 forming a top surface 106. The hole cup 101 further comprises sidewalls 107 extending beyond the top surface 106. Here the bottom piece 105 and the sidewalls 107 are integrated into one unit. However, the sidewalls 107 may be provided with a support structure (not shown) on which a funnel-shaped element (not shown) is arranged. The hole cup 101 has an outer diameter D that corresponds to the inner diameter of the golf hole 104. Here, the outer diameter D is no more than 108mm.

The flagstick 102 comprises a bottom end which is intended to be positioned in a hole on the ferrule 103. Here, the flagstick 102 is formed as a solid unit.

The ferrule 103 comprises a bottom piece 108 adapted to be positioned in a hole 109 in the hole cup 101. The ferrule 103 further comprises a top portion 110 adapted to extend between the top surface 106. A disc element 111 is arranged on the top portion 110 and rests on the top surface 106. The disc element 111 is intended to catch a golf ball 112 that falls into the golf hole 104.

A top end 113 of the hole cup 101 is arranged at a distance D₀₁ of at least 25.4mm from a green surface 114. An upper edge 115 of the top surface 106 is arranged at a distance D₀₂ of at least 101.6mm from the green surface 114.

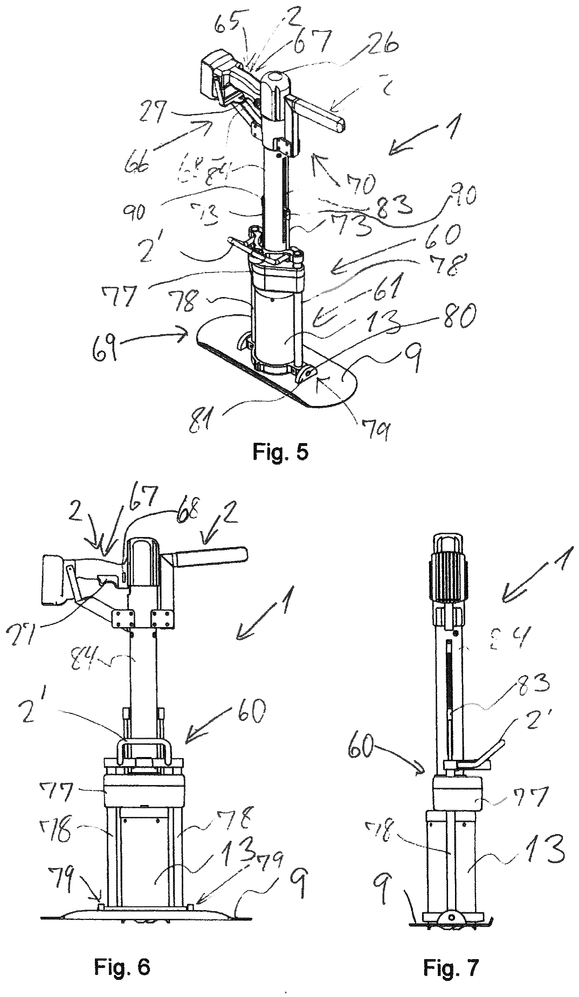

In the following the apparatus according to the present invention will be explained in connection with Figs. 5-14 illustrating different views and different parts of an embodiment of the apparatus.

Accordingly, not all parts will be explained in connection with each figure.

The Figs. 5-14 illustrate a specific embodiment for the present invention and accordingly, the description is not limiting the scope which is defined by the dependent claims.

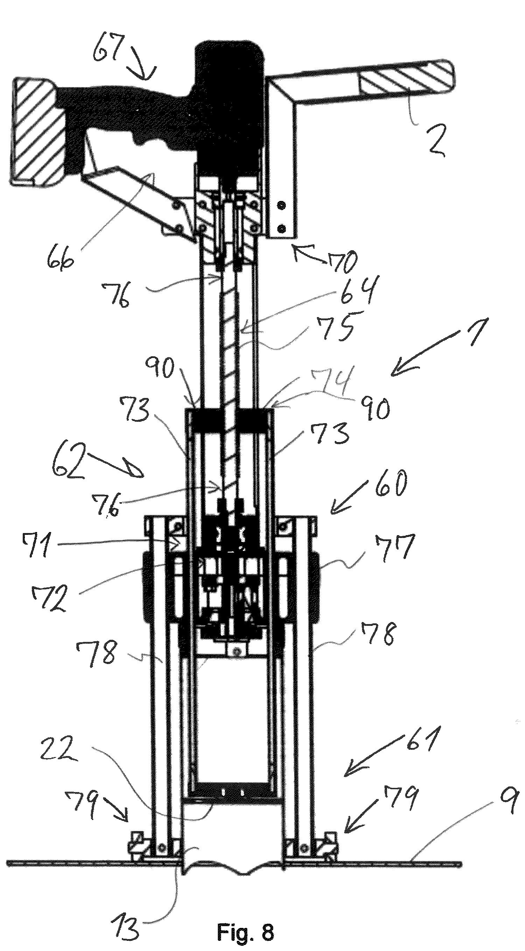

Firstly, reference is made to Fig. 5 and Fig. 8. These figures illustrate an apparatus 1. The apparatus comprises a support frame 60, a movable cutter head 13, handles 2 and a base 61.

Furthermore, the apparatus comprises an ejection mechanism 62. The ejection mechanism comprises an ejection plate 22, a drive shaft 64 and the drive motor 65. The drive motor 65 will power the operation of the apparatus. The apparatus also comprises control means 66.

The drive motor 65 is comprised in a battery-operated handheld power tool 67 which comprises a handle 2 which is also used for operating the apparatus. Moreover, the handheld power tool 67 comprises the control means 66 in form of an activation bottom 27 used for starting and stopping the drive motor and an activation bottom 68 used for shifting the direction of rotation of the drive motor 65 of the handheld power tool 67.

The apparatus comprises a tread plate 9 for contacting a surface 114 (see Fig. 4). The tread plate 9 is arranged at one end 69 of the support frame 60. The handles 2 are arranged at the opposite end 70 of the support frame 60. The tread plate 9 is connected to a part of support frame denoted the base 61 of the apparatus 1.

The cutter head 13 is arranged moveably relative to the base 61 and support frame 60 in such a way that it could be extended or retracted relative to the tread plate 9 along an axial direction being the axial direction of the drive shaft 64. The drive motor 65 is connected to the cutter head 13 via the drive shaft 64. The drive shaft 64 is connected to the cutter head 13 through a drive arrangement 71. The drive arrangement 71 comprises an excentric drive 72 which ensures the reciprocating turning movement of the cutter head 13 is induced by the rotational drive of the drive shaft 64.

Inside the cutter head 13 the ejection plate 22 is arranged. The ejection plate 22 is via guide rods 73 connected with a threaded coupling 74 arranged for cooperation with the threaded drive shaft 64.

The threaded drive shaft 64 comprises a central thread 75 and two non-threaded end portions 76 at each end of the central thread 75. These non-threaded end portions 76 will act as slip couplings when the threaded coupling 74 is placed at the non-threaded end portions 76.

Hereby the axial movement of the cutter head 13 is stopped whereas a continued rotational driving of the drive shaft 64 will continue to provide a reciprocating movement of the cutter head 13. However, it is noted that the axial movement may be continued as the operator may exert a pressure on the handle 2.

The ejection mechanism is arranged in such a way that the ejection plate 22 will eject a drilled plug from the inside of the cutter head 13 when the motor after having drilled the plug with rotation in one direction is reversed for a rotation in the opposition direction. When rotating in the opposite direction the ejection plate 22 is pushed against the drilled plug. As the operator stand on the tread plate 9 the cutter head 13 and a connecting bridge 77 which is connected with the cutter head 13 will move upwardly due to the pressing action on the drilled plug. The drive arrangement 71 mentioned above is an integrated part of the connecting bridge 77 as the connecting bridge 77 constitute a housing for the drive arrangement 71. During this upwardly movement the cutter head 13 will have the reciprocating rotating movement. The connection bridge 77 being a part of the support frame 60 will be slidably connected with guide rods 78 being a part of the base 61. The base 61 is connected with the tread plate 9 for mutually angularly movement.

Accordingly, this method makes it possible for the operator to control the placing of a drilled plug in higher or deeper position in the existing hole and thereby provide a good quality of the golf green after the drilled plug is inserted in the existing hole.

By increasing the pressure on the handle 2 the drilled plug may be compressed whereby the surface of the drilled plug may be positioned below the surface 114 of the green or, if no pressure is effected on the handle, the surface of the drilled plug may be positioned above the surface 114 of the green.

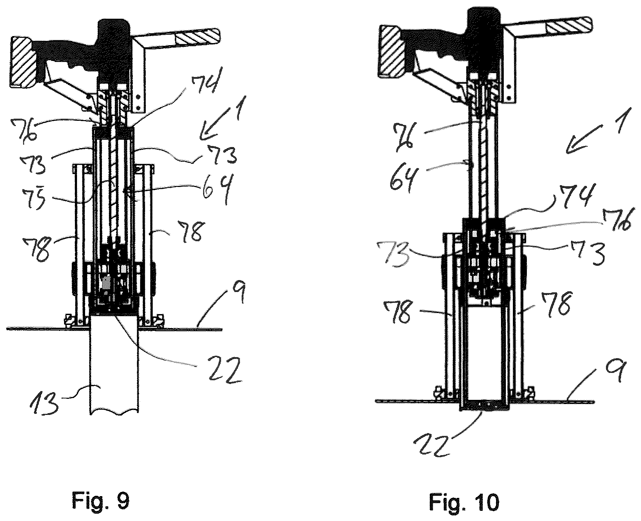

In Fig. 9 a situation is illustrated in which the ejection plate 22 is in top. One can see that the threaded coupling 74 is in a top position arranged at the non-threaded end portion 76 at the upper end of the drive shaft 64.

Fig. 10 illustrates a situation where the ejection plate 22 is arranged in a bottom position and here it is illustrated that the threaded coupling 74 is arranged at the non-threaded end portion 76 at the lower end of the drive shaft 64.

In Fig. 8 an intermediate position for the ejection plate 22 is illustrated.

In Figs. 6 and 7 the apparatus is illustrated in two side views. It is seen that two handles 2 are provided for operating the apparatus. A first handle 2 is a handle connected to the support frame 60 and a second handle 2 is provided as the handle of the handheld power tool 67. Moreover, a lower handle 2' is also illustrated which is used when lifting the apparatus free from the surface after a plug has been drilled.

The handle 2' may also be used for lifting the apparatus during transport from one position to another position on a golf green.

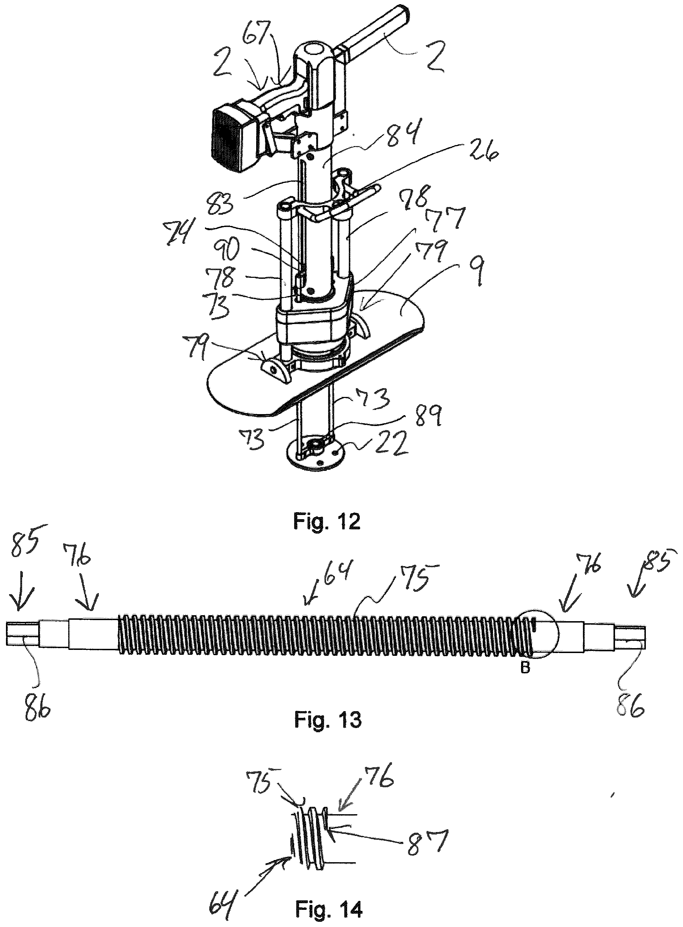

In Fig. 5 connection means 79 are illustrated between the tread plate 9 and the base 61 of the apparatus. These connection means 79 comprise a shaft 80 connected with the base 61 and being arranged in a hole in an ear part 81 on the tread plate 9. This allows a mutual angularly movement of the tread plate 9 and the base 61. The connection means 79 ensure that the apparatus may be placed with the axial direction of the drive shaft 64 in a vertical position even though a surface 114 may be sloping. To ensure the vertical position when drilling a plug, a spirit level 26 is provided in connection with the apparatus. The use of the spirit level 26 is voluntary. The spirit level 26 may be placed in other position e.g. the position illustrated in Fig. 12.

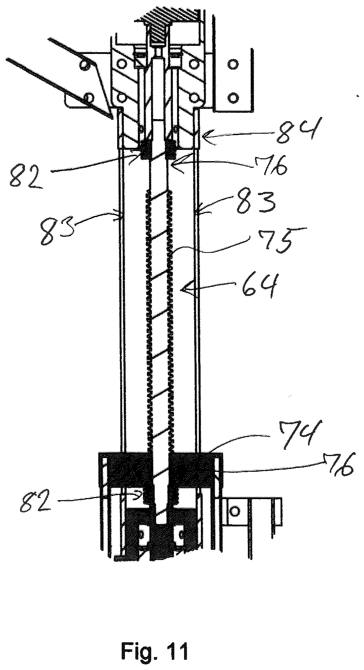

Fig. 11 is enlarged sectional view illustrating the drive shaft more detailed.

It is seen that plate springs 82 are arranged at each end of the non-threaded end portions 76. These plate springs 82 will ensure that the threaded coupling 74 do not have a hard impact when coming to the non-threaded end portions 76. The thread coupling 74 cooperates with the thread 75 of the shaft 64 and ensures a shift in axial displacement when the direction of rotation is changed.

Fig. 12 illustrates a situation where the cutter head is removed and the ejection plate 22 is seen in an intermediate position. It is seen that the ejection plate 22 is connected to the guide rods 73 through a connection bridge 89.

Moreover, Fig. 12 illustrates that the threaded coupling 74 has extensions 90 extending through longitudinal slits 83 provided in a housing 84 being a part of the support frame 60. This ensures that the torque of the rotation of the drive shaft 64 is transferred to an axial movement of the ejection plate 22.

Accordingly, the threaded coupling 74 comprises extensions 90 for connection with the guide rods 73 outside the housing 84 which house the drive shaft 64.

Fig. 13 illustrates a side view of the threaded drive shaft 64. It is seen that the drive shaft 64 at each outermost end 85 comprises a hexagonal shaped end portion 86. This hexagonal shaped end portion 86 of the drive shaft 64 ensures a secure rotational connection with the drive motor 65 at one end and a secure rotational connection with the cutter head 13 at the other end.

Fig. 14 is an enlarged view of an end part of the thread 75. It is seen that an end portion of the thread 75 of the drive shaft 64 comprises a leading chamber portion 87. This leading chamber portion 87 will ensure that the connection between the threaded coupling 74 and the thread 75 always is effected in a secure way.

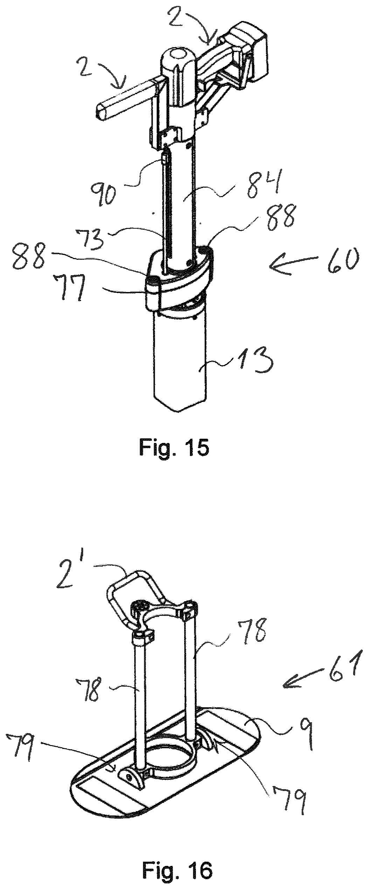

Figs. 15 and 16 are partially schematic views of an apparatus 1 illustrating the support frame 60 in Fig. 15 and the base 61 in Fig. 16. The two part of the apparatus are connected as the guide rods 78 extend through holes 88 in the connecting bridge 77.

## Claims

1. An apparatus for drilling a hole, preferably in a golf green, comprising a support frame (60), a moveable cutter head (13), a handle (2), a base (61), an ejection mechanism (62), a power source comprising a drive motor (65) configured to power the operation of the apparatus and control means (66), where the base (61) is arranged at one end of the support frame (60) and has an tread plate (9) for contacting a surface (114), such as a green surface, the handle (2) is arranged at the opposite end of the support frame (60), the cutter head (13) is arranged relative to the base (61) and configured to extend or retract relative to the tread plate (9) along an axial direction when activated, the drive motor (65) is connected to the cutter head (13) via a drive arrangement (71) with a drive shaft (64) and is configured to control the axial movement of the cutter head (13), and the ejection mechanism (62) is arranged for axial movement relative to the cutter head (13) and configured to eject a drilled plug, such as an earth plug, from the cutter head (13), and wherein the drive arrangement (71) comprise a connecting arrangement which is arranged between the drive shaft (64) and the cutter head (13) for transforming the rotation of the drive shaft (62) into a reciprocating rotating movement of the cutter head (13), **characterised in that** the drive shaft (62) is a threaded (75) shaft which is connected to the cutter head (13) via a threaded coupling (74), where the cutter head (13) is advanced relative to the tread plate (9) when the drive shaft (62) is rotated in one rotational direction and is retracted relative to the tread plate (9) when the drive shaft (62) is rotated in the opposite rotational direction,
that the drive shaft (62) is provided with a central threaded (75) portion and a non-threaded end portion (76) at each end of the thread (75), wherein the non-threaded end portions (76) act as slip couplings configured to allow a rotation of the drive (62) shaft without axial movement of the threaded coupling (74) whereby also the axial movement of the cutter head (13) is stopped,
that the control means (66) is further configured to reverse the rotating direction of the drive motor (65) and thus also the rotational direction of the drive shaft (62).

2. The apparatus according to claim 1, **characterised in that** the power source is mounted in a drivable interface configured to connect the drive motor (65) and the drive shaft (62).

3. The apparatus according to claim 2, **characterised in that** the power source is a handheld power tool (67), and the drivable interface is configured to receive and hold the power tool.

4. The apparatus according to any one of claims 1 to 3, **characterised in that** the control means (66) are integrated in the power source.

5. The apparatus according to any one of claims 1 to 4, **characterised in that** the external power source comprises a battery-operated drive motor (65).

6. The apparatus according to any one of claims 1 to 5, **characterised in that** the control means (66) is configured to be operated via the power source or via control input means arranged on the handle (2).

7. The apparatus according to any one of claims 1 to 6, **characterised in that** the end portions (76) of the thread (75) on the drive shaft (12) comprise a lead-in chamfer portion (87).

8. A method of drilling holes, such as holes in a golf green, using the apparatus according to any one of claims 1 to 7 **characterised in that** the method comprises the following steps:
- grabbing the handle (2),
- positioning the apparatus at a position where a new hole is to be drilled so the tread plate (9) is resting on the surface (114)
- placing the feet of an operator on the tread plate (9),
- using the control means (66) to activate the drive motor (65) for driving the drive shaft (12) in one rotational direction for establishing the reciprocating rotating cutting motion of the cutter head (13), and simultaneously for advancing the cutter head for drilling a new hole,
- keep driving the drive shaft (12) till the threated coupling (74) reach the non-threaded end portion (76), whereby axial movement of the cutting head (13) is stopped,
- using the control means (66) to deactivate the drive motor (65) and thereby stopping the reciprocating rotating cutting motion of the cutter head (13),
- lifting the apparatus vertically upwardly so that the cutter head (13) with a drilled plug is lifter out of the new hole.

9. The method according to claim 8 for placing the drilled plug in an existing hole, **characterised in that** the method comprises the following steps:
- using the control means (66) for reversing the rotation of the drive motor (65),
- positioning the apparatus at a position over an existing hole so that the cutter head (13) with the drilled plug is positioned inside the existing hole,
- placing the feet of an operator on the tread plate (9),
- using the control means (66) to activate the drive motor (65) for rotating the drive shaft (12) in the opposite rotational direction for establishing the reciprocating rotating motion of the cutter head (13), and simultaneously for retracting the cutter head from the existing hole to eject the drilled plug from the cutter head
- keep driving the drive shaft (12) till the threated coupling (74) reach the non-threaded end portion (76), whereby axial movement of the cutting head (13) is stopped leaving the plug in the existing hole,
- using the control means (66) to deactivate the drive motor (65) and thereby stopping the reciprocating rotating motion of the cutter head (13),
- removing the apparatus and optionally fine-adjusting the level of the drilled plug relative to the level of the surrounding surface (114) to conceal the existing hole.

10. The method according to claim 8 or 9, **characterised in that** the method comprises the following step,
- drilling the hole in a golf green, which hole is provided for the placement of a hole cup (101).
